Europäisches Patentamt

European Patent Office

Office européen des brevets

(19)

(11) Publication number: **0 040 585**
**A1**

# EUROPEAN PATENT APPLICATION

(12)

(21) Application number: 81830067.5

(22) Date of filing: 30.04.81

(51) Int. Cl.³: **B 65 G 25/04**

(30) Priority: 21.05.80 IT 2222580

(43) Date of publication of application:
25.11.81 Bulletin 81/47

(84) Designated Contracting States:
AT BE CH DE FR GB LI LU NL SE

(71) Applicant: TAC RiVETING SYSTEM di Oggionni
Piergiorgio e C. s.a.s.
3, Via Thaon di Revel
Milano(IT)

(72) Inventor: Oggionni, Piergiorgio
Via Thaon di Revel 3
Milano(IT)

(74) Representative: Notarbartolo, Manfredi et al,
Studio Brevetti e Marchi NOTARBARTOLO & GERVASI
Viale Bianca Maria, 33
I-20122 Milano(IT)

(54) Machine and method for feeding power machines.

(57) A machine and method for loading power machines with positioned oblong pieces, composed of a series of steps (3,4,5,6,7,8) divided into two parts, one fixed and the other mobile with approximately vertical reciprocating motion, the lower step (3) fed with said pieces raising them by means of its mobile part and passing them by gravity into the fixed part of the upper step (4), the mobile part of the lower step (3) then being lowered; the cycle is repeated, and the pieces are discharged from the last step (8).

EP 0 040 585 A1

./...

FIG 2

The 

- 1 -

Machine and method for feeding power machines.

This invention relates to a machine for feeding power machines by raising and positioning the pieces disposed in a suitable manner. The invention also relates to a method for feeding power machines with oblong pieces which are raised by mobile means, pass by gravity on to fixed means, and are discharged from the upper fixed means. The invention also relates to an operational system for the said object, using the new machine according to the invention. The machine according to the invention is able, by means of raising and parallel positioning, to load or feed pointed oblong pieces such as nails, needles, pins, bars and small items in general such as screws, rivets, rods and the like, and also ingots, billets and the like having a length/diameter ratio greater than 1, and in particular greater than 5.

In the case of pieces in which said ratio is equal to or less than 1, for example in the case of cylinders, heads, washers, weldnuts, plugs and the like, the machine can carry out the loading operation by raising, but cannot position the pieces, which because of their nature are either not positionable or positionable only to a small extent.

From the prior art, three machines are known having the same purpose as the invention, but which base their operation on different principles. These machines are described hereinafter.

Slat elevator machine

Said machine is composed of two parts, namely a hopper and a slat elevator installed in the hopper, and of which the slats are inclined to a certain extent to the horizontal.

As the elevator rotates, the slats withdraw the material from the hopper, so raising it. By this means, pieces having a length/diameter ratio greater than 1 tend to become disposed parallel to the plane of the slat and positioned along its length, to then become discharged by gravity at the predetermined point, generally at a chute which conveys them to the user item.

The said machine has the following drawbacks:

- the raising speed is relatively low in order to enable the pieces to become positioned and to slide along the slats;

- it has only one feed point, namely the loading point, where a certain number of pieces disposed in a disordered manner are collected, and frequently some of these are not disposed parallel to the slats;

- loading difficulties for small diameter pieces or pieces with pointed ends, in that the elevator comprises relatively large gaps which tend to collect the pieces, so blocking their rotation.

Rotating blade elevator and positioning machine

Said machine is composed of two parts, namely a hopper and a rotating drum to which blades are fixed for raising the pieces withdrawn from the hopper, to cause them to fall in bulk on to guides and/or rollers which convey them to the user item.

The machine has the following drawbacks:

- low raising height in order not to have to use drums of excessive diameter;

- random positioning, because the pieces fall in bulk on to the guides or rollers·

Automatic vibration distributors

Automatic vibration distributors are generally constituted by a base containing the vibrator, and a circular container fixed to the base, which acts as a store for the pieces to be loaded.

The vibration transmitted to the container causes the pieces to become positioned and disposed on suitable tracks, which convey them to the user item. The drawbacks are as follows:

- large overall dimensions,

- high noise level,

- the same machine cannot be used for loading different pieces.

The present invention obviates the aforesaid drawbacks of known machines of the slat, rotating blade and vibration type, and has many advantages which will be apparent to the expert from the description given hereinafter. The machine according to the present invention is constituted by a series of steps disposed in the from of a stairway, each step being formed from a mobile part and a fixed part. These parts will be referred to as the mobile step (and generally as the mobile means), and the fixed step (and generally as the fixed means). More particularly, the machine is constituted essentially by a series of n fixed steps and n-1 mobile steps, which can be driven with reciprocating motion in a direction verying from the vertical to approximately horizontal by means of a suitable drive unit. In the case of vertical or inclined motion, the machine raises and positions the oblong pieces, and in the case of horizontal motion the machine pushes the pieces without positioning them.

When the mobile steps are in their bottom and top dead centre position, they form, in cooperation with the surfaces of the fixed steps, the tread of the stairway steps.

Both the mobile and fixed steps can be constituted by hollow plates in order to lighten them.

During each cycle of the reciprocating motion, the pieces are raised by the mobile steps and deposited on to the next upper fixed step, while those of the top step are conveyed by a suitable chute to the conveying unit. In order to facilitate passage of the material from the fixed steps to the mobile steps and to the discharge chute, the machine can be inclined at a suitable angle, for example from 1° to 30°.

The steps, which are preferably modular, can be of any number, and this will depend in particular on the behaviour of the material to be raised and positioned and/or on the required height of raising.

From the aforegoing, it follows that the machine need be provided with only a single step to give the minimum operability conditions, and the machine can then be modified according to requirements by mounting other modular steps thereon, so gradually increasing its raising and positioning capacity, while maintaining the amplitude of the reciprocating motion constant, and keeping the same base structure.

The gap between the mobile and fixed steps can be kept preferably between 0.05 and 0.1 mm, so preventing pieces of small diameter from entering the gap and hindering the machine motion.

The step dimensions are obviously a function of the piece dimensions.

In general, with pieces having a length/diameter ratio greater than 1 and a length of between 5 and 100 mm, the dimensions of the tread of the stairs are for example as follows:

- thickness of both mobile and fixed steps from 5 to 50 mm

- width of both mobile and fixed steps from 50 to 500 mm

- height (i.e. stroke of the reciprocating motion) from 1, in the case of very small diameter objects, to 250 mm and beyond.

The advantages of the machine according to the invention over those of the known art are as follows:

a - feed speed considerably greater than that of known machines

b - individual separation of the bulk fed pieces (as described in greater detail hereinafter) with ideal positioning thereof by the effect of the different positioning stages

c - possibility of feeding pieces of small diameter and of large length/ diameter ratio

d - possibility of feeding pieces with pointed ends (such as nails, needles, pins, rivets, screws, rods, various preforms etc.)

e - constant modular step elevation pitch.

Possibility of different suitable constructional heights and widths of the step, and consequently of the points of selection in accordance with technical, operational and constructional requirements of the power machine to be fed, and of the shape of the piece to be fed.

f - modularity of the loading system from 1 to n steps.

Possibility of modular assembly of the mobile steps and of the respective fixed cross members to obtain an optimum number of selections in accordance with the difficulties of the piece to be positioned for its efficient feed

g - absolutely no noise

h - very small overall dimensions in relation to its considerable feed potential

i - because of and as a consequence of the easy modularity of the multiple step system, the machine also assumes the characteristic of a conventional elevator, and is also particularly suitable for compensating large height differences.

In addition to the already described elevator and positioning machine, the present invention also comprises a system for feeding power machines, comprising, in succession, a feed unit, the elevator and positioning machine, and a conveying unit of roller and/or guide type, in which the feed unit is constituted essentially by a loading hopper containing the pieces in bulk and provided with devices such as chutes, guides, and channels for transferring the pieces into a weighing device which causes the feed flow from the loading hopper to stop when the scheduled quantity of pieces has filled the weighing device which is located in a position corresponding with the first step of said new elevator and positioning unit.

Pre-positioning is provided by disposing the feed path for the pieces parallel to the fixed (and mobile) means.

The invention is further described by way of non-limiting example from the following figures, in which :

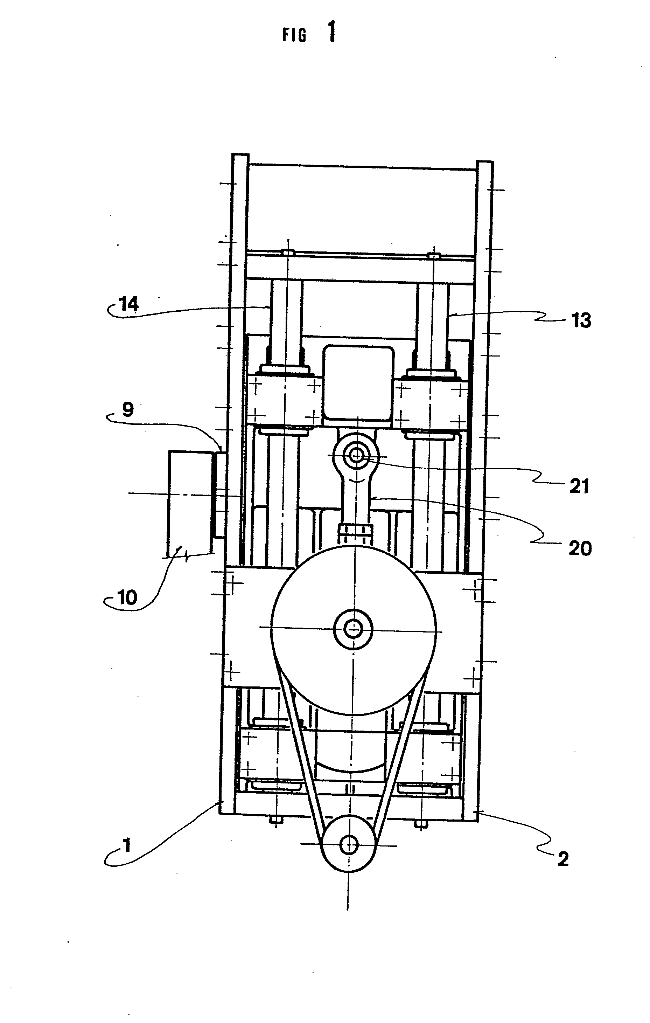

Figure 1 is a cross-section through the machine according to the inven- vention.

Figure 2 is an elevational view of the machine of Figure 1

Figures 3, 4 and 5 are diagrammatic representations of the machine of the preceding figures when in its top dead centre position, its mobile parts being respectively shown inclined, inclined but with a difference in level between the fixed and mobile parts, and straight up but with the fixed and mobile parts bevelled in order to facilitate discharge of the material

Figure 6 represents the machine of the preceding figures, but with the last two steps being provided with a double incline in order to discharge the pieces laterally

Figure 7 shows the machine of the preceding figure, but with the fix ed steps provided with spaced-apart raised portions to allow selection of the pieces.

The machine shown by way of example is composed of two side pieces 1 and 2 joined together by six fixed steps 3 to 8 which act as spa cers.

Guide rods 13 and 14 are fixed to the cross members 11 and 12, which are fixed to the side pieces 1 and 2 of the machine, and to the side piece 1 there is also fixed the pin 9, which is inserted into the support 10 of a power machine, which is fed by the machine according to the invention, but is not shown in that it does not form part of the invention.

The elevator assembly 15 which comprises the six mobile steps 3 to 8 is guided by the rods 13 and 14 in its vertical reciprocating movement.

The reciprocating movement is obtained by means of a geared motor 16 connected to the crankshaft 17 by the belts 15 which cause the crank pin 19 to rotate, and by way of the connecting rod 20 which is connected to the pin 21.

During each machine cycle, the material disposed on the steps is rai sed on to the step above, and at the top end is discharged through the chute 25 to feed a power machine.

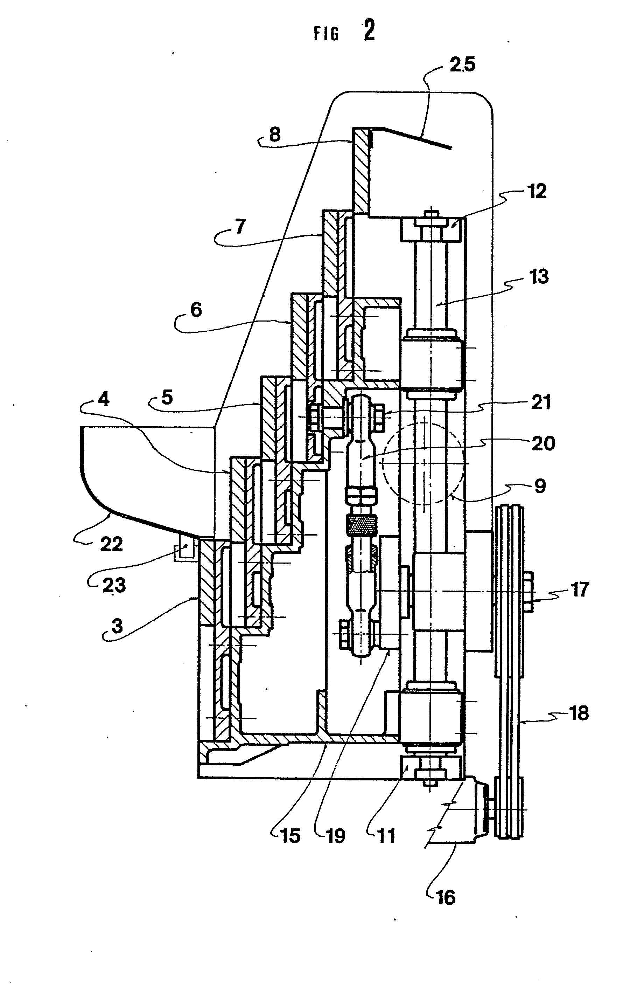

The discharge takes place by inclinating the machine of Figure 2 to the right of the drawing at a suitable angle.

The machine is fed as stated heretofore, through the mouth 22 which is separated from the hopper, which is not shown.

By means of a vibrator, not shown, the hopper discharges at the appropriate time a certain quantity of pieces into the weighing mouth which, because of the weight of the pieces, is lowered until it touches the limit switch 23, which stops the vibrator and consequently the feed flow of the pieces from the hopper.

When the predetermined quantity of pieces contained in the mouth has been taken by the machine, the mouth rises again, so connecting the vibrator, which carries out the next filling of the mouth.

The following modifications, considered either individually of in combination, can be made to the machine heretofore described in order to better adapt it to the type of pieces and the material of which they are constituted:

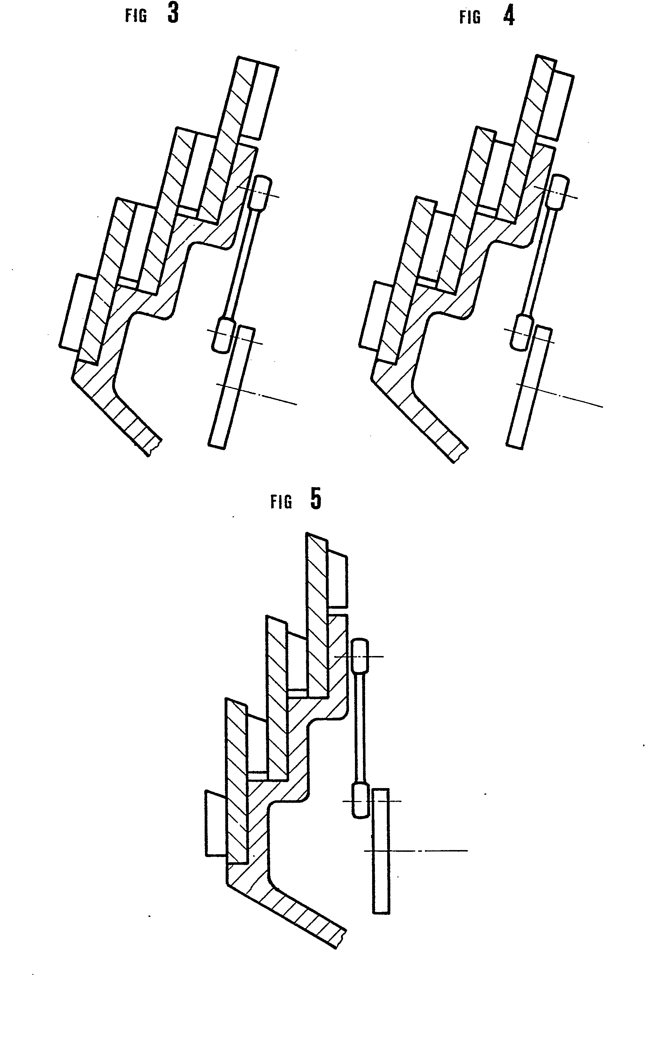

a — as shown in Figure 3, the machine is inclined for example at 15-20° to facilitate discharge of the pieces. The inclination can however lie between 5 and 90°, at this latter inclination the machine acting as a pusher;

b — if during their vertical rising stroke the mobile steps pass beyond the fixed steps by for example 2-3 mm, and likewise if during their descending stroke they fall below the fixed steps by 2-3 mm, both the discharge and charging time are extended, so increasing the elevating capacity of the machine and its discharge capacity. If the machine is then also inclined, as shown in Figure 4, the machine capacity is further increased.

The level difference between the steps can lie between 2 and 40 mm.

c — the upper surfaces of the fixed and mobile steps can be inclined at for example 20° as shown in Figure 5, or such other inclination as to enable the machine to be disposed in a vertical position, with a consequent reduction in its overall plan dimensions;

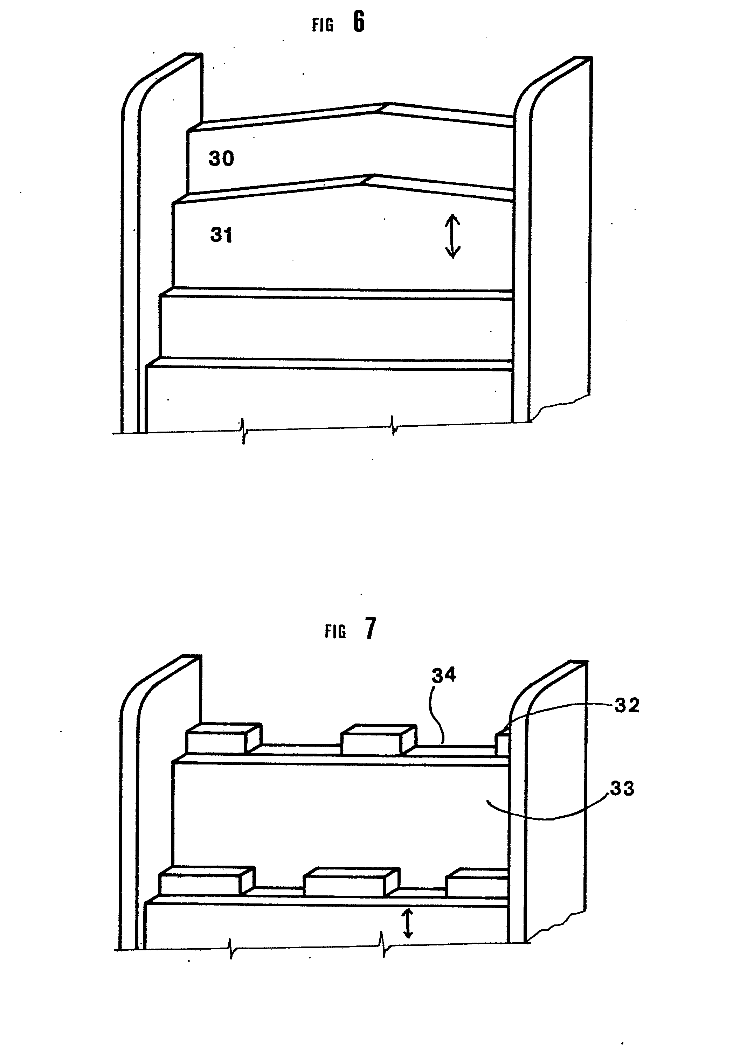

d - by further shaping the profile of the upper surfaces of the two steps 30 and 31 as a hog's back (as shown in Figure 6), it is possible to direct the discharge flow along two separate paths according to requirements;

e - by further disposing suitable apertures 34 on the fixed step 32, the mobile steps being indicated by 33 (as shown in Figure 7), the pieces can be selected according to their length, and it becomes possible to discharge the pieces at predetermined points.

It is apparent that further modifications can be made to the present invention, all of which lie within the scope of the inventive idea.

* * *

Claims :

1. A machine for loading power machines by raising and, where their shape allows it, positioning the pieces to be handled, characterised by comprising from 2 to n fixed means disposed in the form of a stairway; from 1 to n-1 mobile means rigidly connected to each other, they being offset with respect to the fixed means and also disposed in the form of a stairway, and being provided, together with the fixed means, with mutual slide surfaces; means for imparting reciprocating movement to the mobile means; and discharge means.

2. A machine as claimed in claim 1, characterised in that the fixed means are constituted by plates, which can be hollow.

3. A machine as claimed in claim 1 or 2, characterised in that the mobile means are constituted by plates which are rigid with each other and which can be lightened.

4. A machine as claimed in one of the preceding claims, characterised in that the fixed and mobile means are modular.

5. A machine as claimed in one of the preceding claims, characterised in that the gap between the fixed and mobile means is from 0.05 to 0.5 mm.

6. A machine as claimed in one of the preceding claims, characterised by being inclinable to the vertical in the direction of discharge of the material by less than 90°, for example by 15°-20°.

7. A machine as claimed in one of the preceding claims, characterised in that for pieces having a length of from 5 to 100 mm and a length/ diameter ratio > 1, the fixed and mobile means have a thickness of 5-50 mm, a width of 50-500 mm and a height of 1-250 mm, by way of example.

8. A machine as claimed in one of the preceding claims, characterised in that n is any whole number of the natural series, but generally not exceeding 5.

9. A machine as claimed in one of the preceding claims, characterised in that the end of the mobile means passes beyond the end of the fixed means by from 2 to 40 mm, for example 2-3 mm.

10. A machine as claimed in one of the preceding claims, characterised in that the upper surfaces of the two end mobile and fixed means are of hog's-back inclination.

11. A machine as claimed in one of the preceding claims, characterised in that the fixed means are provided upperly with suitable apertures.

12. A machine as claimed in one of the preceding claims, characterised in that the discharge means are constituted by a chute fitted to the last fixed means.

13. A method for raising and positioning generally oblong pieces, characterised in that the pieces, in bulk, are raised by the mobile means, after each raising operation a proportion of the pieces is displaced by the mobile means on to the fixed means, the mobile means are lowered to return to their initial position, the cycle is then repeated, and the pieces are finally discharged from the last fixed means of the machine.

14. A method as claimed in the preceding claims, characterised in that the pieces are fed into the machine in a direction parallel to the mobile and fixed means, so that the pieces become pre-positioned.

15. A system for feeding power machines, comprising, in succession a feed unit, the elevator and positioning machine according to the invention, and a conveyor unit of the roller and/or guide type, in which the feed unit is constituted essentially by loading hopper containing the pieces in bulk and provided with devices such as chutes, guides, and channels for transferring the pieces into a weighing mouth which causes the feed flow of the loading hopper to stop when the scheduled quantity of pieces has filled the weighing mouth, which is located in a position corresponding with the first step of said new elevator and positioning machine.

* * * *

FIG 1

0040585

1/4

FIG 2

FIG 3

FIG 4

FIG 5

FIG 6

30

31

FIG 7

34

32

33

| Category | Citation of document with indication, where appropriate, of relevant passages | Relevant to claim |
|---|---|---|
| | US – A – 4 199 055 (GREEN)<br>  * Fig. 4 * | 1–3 |
| | US – A – 3 785 477 (KWASNITSCHKA)<br>  * Fig. 1 * | 1–3 |
| | US – A – 3 708 053 (ANDERSON)<br>  * Fig. 5–7 * | 1–3 |
| | US – A – 3 640 378 (ELLIOT)<br>  * Fig. 2 * | 1–3 |

## DOCUMENTS CONSIDERED TO BE RELEVANT

**CLASSIFICATION OF THE APPLICATION (Int. Cl. 3)**

B 65 G 25/04

**TECHNICAL FIELDS SEARCHED (Int.Cl. 3)**

B 65 G

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | The present search report has been drawn up for all claims | |
|---|---|---|
| Place of search<br>VIENNA | Date of completion of the search<br>04–08–1981 | Examiner<br>PISSENBERGER |

X

EPO Form 1503.1   06.78